# EUROPÄISCHE PATENTANMELDUNG

(11) **EP 2 088 019 A2**
(43) Veröffentlichungstag der Anmeldung: **12.08.2009**
(21) Anmeldenummer: 09001386.3
(22) Anmeldetag: 02.02.2009
(51) Int. Cl.: B60J 3/02

(54) **Überzug für eine längliche Sonnenblende**

(30) Priorität: 06.02.2008 DE 202008001681 U
(71) Anmelder: Niestroj, Robert, 41464 Neuss (DE); Kaiser, Marcel, 41464 Neuss (DE)
(72) Erfinder: Niestroj, Robert, 41464 Neuss (DE); Kaiser, Marcel, 41464 Neuss (DE)
(74) Vertreter: Paul, Dieter-Alfred

(57) **Zusammenfassung**

Die Anmeldung betrifft einen Überzug für eine längliche Sonnenblende (2), insbesondere eines Kraftfahrzeugs, die an einer ihrer Längsseiten gehalten ist, die dadurch gekennzeichnet ist, dass der Überzug (1) die der Sonne zugewandte Außenseite und die nicht gehaltenen Seitenrärder der Sonnenblende (2) bedeckt und der Überzug (1) an seinem Randbereich einen Bund (8) mit einem darin eingelassenen Zugband aufweist.

## Beschreibung

Die Erfindung betrifft einen Überzug für eine längliche Sonnenblende, insbesondere eines Kraftfahrzeugs, die an einer ihrer Längsseiten gehalten ist, wobei der Überzug beutelartig ausgebildet ist. Des weiteren betrifft die Erfindung einen Überzug für eine längliche Sonnenblende, insbesondere eines Kraftfahrzeugs, die an einer ihrer Längsseiten gehalten ist.

Derartige Überzüge sind insbesondere für Sonnenblenden in Kraftfahrzeugen sehr weit verbreitet. Die Sonnenblenden in diesen Kraftfahrzeugen sind im Normalfall an zwei Punkten gehalten, wobei die Sonnenblende an einem der Punkte einrastbar und um den anderen Punkt drehbar ist. Außerdem sind die Sonnenblenden an den beiden Befestigungspunkten schwenkbar, so dass sie bei der Benutzung vor die Scheibe und sonst an den Fahrzeughimmel geschwenkt werden können.

Damit ergibt sich, dass die Sonnenblenden bei häufigem Wetterwechsel auch häufig bewegt werden, wofür sie jeweils angefasst werden müssen. Dabei können Verschmutzungen der Sonnenblenden nicht ausgeschlossen werden. Auch ist eine Seite der Sonnenblende starker Sonneneinstrahlung ausgesetzt, so dass hier die Gefahr des Ausbleichens besteht. Durch einen derartigen Farbunterschied kann das ästhetische Empfinden der Fahrzeugbesitzer oder -nutzer beeinträchtigt werden, weshalb insgesamt das Anbringen von Überzügen an Sonnenblenden sinnvoll ist. Zusätzlich kann die Sonnenblende durch einen Überzug individuell gestaltet werden, so **dass** der ästhetische Gesamteindruck des Fahrzeugs verbessert werden kann.

Die Überzüge sind üblicherweise an einer Querseite geöffnet, und werden mit dieser Öffnung von einer Querseite der Sonnenblende aufgezogen. Aufgrund der Halterung an den zwei Punkten ist es für die Montage des Überzugs erforderlich, die Sonnenblende aus der einen Halterung herauszunehmen. Nach dem Aufschieben des Überzugs ist die Halterung jeweils wieder zu befestigen. Prinzipiell vergleichbar sind Überzüge, die lediglich schlauchförmig und damit an beiden Seiten geöffnet sind, und wie sie zum Beispiel in der DE 36 34 937 A1 beschrieben sind.

Auf die gleiche Weise werden auch Überzüge montiert, die lediglich eine Seite der Sonnenblende bedecken, wobei an den Längsseiten des Überzugs üblicherweise zwei Gummibänder befestigt sind, um den Überzug an der Sonnenblende zu halten.

Allen diesen Überzügen ist gemein, dass der Überzug nur an der Sonnenblende angebracht werden kann, wenn diese zumindest teilweise aus ihrer Halterung genommen wird. Damit ist der Aufwand für das Anbringen des Überzugs groß und potentielle Nutzer werden durch den Aufwand abgeschreckt.

Aufgabe der vorliegenden Erfindung ist es daher, einen Überzug der eingangs genannten Art zur Verfügung zu stellen, der mit einem geringen Aufwand anzubringen ist.

Diese Aufgabe ist erfindungsgemäß dadurch gelöst, dass der Überzug die der Sonne zugewandte Außenseite und die nicht gehaltenen Seitenränder der Sonnenblende bedeckt und der Überzug an seinem Randbereich einen Bund mit einem darin eingelassenen Zugband aufweist.

Die Grundidee ist eine Verbindung über die gehaltene Längsseite des Überzugs herzustellen, ohne dass die Sonnenblende aus einer Halterungen entfernt werden muss. Der Überzug überdeckt lediglich eine Seite der Sonnenblende und wird auf der gegenüberliegenden Seite gehalter, indem der Überzug sich teilweise über diese erstreckt und dessen Ränder dort zusammengezogen werden. Diese Funktion übernimmt das Zugband. Zusätzlich bewirkt das Zusammenziehen, dass sich der Überzug an die Form der Sonnenblende anpasst.

Bei schwenkbaren Sonnenblenden, wie sie üblicherweise in Kraftfahrzeugen verwendet werden, wird die Außenseite der Sonnenblende mit dem Überzug bedeckt, so dass die Sonnenblende bei Benutzung nicht der Sonne ausgesetzt ist. Dadurch wird ein Ausbleichen der Oberfläche der Sonnenblende durch die Sonnenstrahlung vermieden und nur der Überzug muss gegebenenfalls erneuert werden.

Die Enden des Zugbandes können aus dem Bund herausreichen, so **dass** der Bund mit dem Zugband zusammengerafft werden kann. Alternativ oder zusätzlich kann das Zugband ein elastisches Band, insbesondere ein Gummiband sein. In beiden Fällen sind die Bänder geeignet, um den Rand des Überzugs zusammenzuziehen, so dass der Überzug auf der Sonnenblende gehalten wird und sich weitgehend an die Form der Sonnenblende anpasst. Das Gummiband bietet den Vorteil, dass das Anbringen des Überzugs besonders schnell und einfach möglich ist, während das Zusammenraffen des Zugbandes ein festeres und dauerhafteres Anbringen des Überzugs auf der Sonnenblende ermöglicht.

Zusätzlich kann der Überzug wenigstens ein Querband aufweisen, das an einer Seite, insbesondere der gehaltenen Längsseite des Überzugs vorgesehen und über die Innenseite der Sonnenblende mit einer anderen Seite, insbesondere der anderen Längsseite des Überzugs verbindbar ist, um den Überzug an der Sonnenblende zu fixieren. Das Querband kann sich beispielsweise von der gehaltenen Längsseite des Überzugs zu der anderen Längsseite des Überzugs erstrecken und so mit dem Überzug die Sonnenblende vollständig umschliessen. Dadurch wird der Überzug besonders sicher auf der Sonnenblende gehalten und auch teilweise über die gehaltene Längsseite der Sonnenblende gezogen. Eine andere vorteilhafte Ausgestaltung besteht darin, jeweils ein Querband von der gehaltenen Längsseite mit den beiden Querseiten zu verbinden. Das Anbringen des wenigstens einen Querbands stellt eine zusätzliche Haltefunktion für den Überzug dar. Dadurch kann z.B. ein dünneres oder weniger elastisches Zugband gewählt werden.

Des weiteren können Befestigungsmittel an dem Überzug vorgesehen sein, mit denen das wenigstens eine Querband mit der anderen Seite des Überzugs verbindbar ist. Das Querband ist also nicht fest mit beiden Seiten des Überzugs verbunden, so dass der Überzug über die Halterungen angebracht werden kann. Danach wird der Überzug auf der Sonnenblende gesichert, indem das Querband mit dem Befestigungsmittel mit der anderen Längsseite des Überzugs verbunden wird.

Die Ausgestaltung der Befestigungsmittel sollte möglichst einfach sein und mit handelsüblichen Mitteln bewerkstelligt werden. So könnten die Befestigungsmittel wenigstens einen Knopf und ein Knopfloch, einen Druckknopf, einen Klettverschluss, eine Verbindungsschnur oder einen Hacken und Öse umfassen. Auch Kombinationen aus verschiedenen Befestigungsmitteln sind prinzipiell möglich, wobei jedoch ein einteiliges Befestigungssystem in der Praxis einfacher zu verwenden ist.

Zusätzlich kann das wenigstens eine Querband ein elastisches Band, insbesondere ein Gummiband sein. Dadurch können die Längsseiten des Überzugs gegeneinander gespannt werden, wodurch der Überzug besonders gut auf der Sonnenblende sitzt und deren Form annimmt.

In weiterer Ausgestaltung der Erfindung ist eine Mehrzahl von Querbändern an den Überzug vorgesehen, welche so beabstandet voneinander über die Innenseite der Sonnenblende geführt sind, dass ein Teil der Innenseite, insbesondere ein daran vorgesehener Spiegel, sichtbar und zugänglich ist. Üblicherweise ist besonders ein mittlerer Bereich der Sonnenblende freizuhalten, da hier zum Beispiel der Spiegel platziert ist. Zusätzlich ist es für das Anbringen des Überzugs besonders vorteilhaft, mehrere Querbänder gerade in den Außenbereichen des Überzugs zu verwenden, weil dadurch der Halt des Überzugs auf der Sonnenblende besonders gut gewährleistet werden kann. Dabei ergibt sich automatisch, dass der mittlere Bereich ausgespart wird. Weitere Querbänder können den Halt des Überzugs auf der sonnenblende darüber hinaus verbessern, allerdings mit der zunehmenden Wahrscheinlichkeit einer Überdeckung des freizuhaltenden Bereichs der Sonnenblende. Somit ergibt sich neben der guten Bedienbarkeit des Spiegels der Vorteil der verbesserten Befestigung des Überzugs an der Sonnenblende.

Auch kann ein Querband mit einem Teilbereich des Bundes eine Einfassung bilden, die eine Halterung der Sonnenblende umschließt. Damit ergibt sich ein sicherer Sitz für den Überzug und die Gefahr des Verrutschens wird reduziert. Insbesondere kann dadurch der Überzug auch an der gehaltenen Längsseite teilweise auf die Innenseite gezogen werden, so dass der Überzug über alle vier Seiten der Innenseite gleichmäßig gehalten ist.

Des Weiteren kann der Überzug zumindest teilweise aus einem elastischen Material gefertigt sein und im aufgeschobenen Zustand die Form der Sonnenblende annehmen.

In weiterer Ausgestaltung der Erfindung weist der Überzug zumindest einen Ausschnitt auf, der im aufgeschobenen Zustand mit der Position einer Halterung korrespondiert. Sonnenblenden in Kraftfahrzeugen sind üblicherweise mit zwei Halterungen befestigt, von denen eine dreh- und schwenkbar mit dem Kraftfahrzeug fest verbunden ist. Die andere Halterung ist in eine Aufnahme am Kraftfahrzeug einrastbar. Somit kann der Ausschnitt bei der Montage des Überzugs über diese einrastbare Halterung gezogen werden, so dass sich der Rand des Überzugs gleichmäßig über die Innenseite der Sonnenblende legt.

Bei einer zweiten Art von Überzügen für längliche Sonnenblenden gemäß der vorliegenden Erfindung ist die obige Aufgabe dadurch gelöst, dass eine Beutelöffnung an einer Längsseite des Überzugs vorgesehen ist, so dass dieser von einem der gehaltenen Längsseite der Sonnenblende gegenüberliegenden Seite auf die Sonnenblende aufschiebbar ist, und Befestigungsmittel im Bereich der Beutelöffnung vorgesehen sind, mit denen der Überzug an der Sonnenblende fixierbar ist.

Der Erfindung liegt somit auch hier die Überlegung zugrunde, einen Überzug derart auszugestalten, dass er auf die Sonnenblende aufgeschoben werden kann, ohne **dass** die Sonnenblende aus ihrer Halterung herausgenommen werden muss. Da die Sonnenblende an einer Längsseite gehalten wird ist es dafür erforderlich, den Überzug von der gegenüber liegenden Längsseite aufzuziehen. Dadurch wird das Anbringen des Überzugs schneller und einfacher möglich.

In weiterer Ausgestaltung der Erfindung weisen die Befestigungsmittel einen die Beutelöffnung umgebenden Bund und ein darin eingelassenes Zugband auf. Mit dem Zugband kann die Beutelöffnung zumindest teilweise verschlossen werden, so dass der Überzug fest über der Sonnenblende angebracht ist.

Dabei können die Enden des Zugbandes aus dem Bund herausreichen, so **dass** der Bund mit dem Zugband zusammengerafft werden kann. Alternativ oder zusätzlich kann das Zugband auch ein elastisches Band, insbesondere ein Gummiband sein. In beiden Fällen wird die Beutelöffnung durch das Zugband verschlossen, so dass der Überzug nicht von der Sonnenblende herunterrutschen oder unbeabsichtigt von der Sonnenblende entfernt werden kann. Im Fall des elastischen Bandes geschieht das Schließen der Öffnung sogar automatisch beim Aufziehen des Überzugs.

In einer alternativen Ausführungsform umfassen die Befestigungsmittel wenigstens einen Kopf und Kopfloch, einen Druckknopf, einen Klettverschluss, ein Paar Verbindungsschnüre oder einen Hacke und Öse. Die Befestigungsmittel sind jeweils auf die beiden Seiten der Beutelöffnung verteilt, so **dass** die Beutelöffnung über diese Befestigungsmittel verschlossen werden kann. Die aufgelistete Befestigungsmittel stellen eine Auswahl gängiger Befestigungsmittel dar und können prinzipiell auch kombiniert werden, einheitliche Befestigungsmittel erleichtern jedoch die Handhabung bei der Befestigung. Auch andersartige Befestigungsmittel können problemlos eingesetzt werden.

Des weiteren kann der Überzug zumindest teilweise aus einem elastischen Material gefertigt sein und im aufgeschobenen Zustand die Form der Sonnenblende annehmen. Damit kann ein universal angefertigter Überzug für unterschiedlich große Sonnenblenden verwendet werden. Es ist also nicht nötig, für jede spezielle Form einer Sonnenblende einen eigenen Überzug herzustellen, was den Produktionsaufwand verringert. Außerdem ist ein eng anliegender Überzug auch vorteilhaft, weil die Sonnenblende leichter zu greifen ist, ohne die Gefahr, in den leeren Überzug zu greifen. Schließlich entspricht der enganliegende Überzug auch dem ästhetischen Empfinden der meisten Nutzer, so dass hierüber die Bereitschaft zur Nutzung eines Überzuges erhöht wird.

Auch kann der Überzug teilweise aus einem transparenten Material bestehen, so dass ein Teil der Sonnenblende, insbesondere ein daran vorgesehener Spiegel, sichtbar ist. In vielen Kraftfahrzeugen und insbesondere in fast allen Autos ist es heutzutage üblich, dass in Sonnenblenden ein sogenannter "Schminkspiegel" integriert ist. Damit der Spiegel auch weiterhin sichtbar ist, kann an der Stelle, an der üblicherweise der Spiegel vorgesehen ist, das Material des Überzugs transparent sein. Um den unterschiedlichen Ausgestaltungsformen von Sonnenblenden mit Spiegeln Rechnung zu tragen, ist es vorteilhaft, wenn der transparente Bereich nicht nur auf einen Spiegel in einem bestimmten Sonnenblendenmodell abgestimmt ist, sondern einen größeren Bereich umfasst. Prinzipiell kann auch eine ganze Seite des Bezugs oder sogar die gesamte Sonnenblende aus dem transparenten Material bestehen.

Da die in den Fahrzeugen verwendeten Spiegel der Sonnenblenden üblicherweise abdeckbar sind, um Irritationen, insbesondere eines Fahrers zu vermeiden, kann der Überzug eine Aussparung aufweisen, so dass ein Teil der Sonnenblende sichtbar und zugänglich ist. Somit kann die Abdekkung des Spiegels ohne Einschränkungen betätigt werden und der Spiegel ist über die Aussparung nutzbar.

Hinsichtlich weiterer vorteilhafter Ausgestaltung der Erfindung wird auf die Unteransprüche sowie nachfolgende Beschreibung von Ausführungsbeispielen unter Bezugnahme auf die beiliegenden Zeichnungen verwiesen. In der Zeichnung zeigt:
- Figur 1: einen erfindungsgemäßen Überzug auf einer Son- nenblende gemäß einer ersten Ausführungsform,
- Figur 2: einen erfindungsgemäßen Überzug auf einer Son- nenblende gemäß einer zweiten Ausführungsform,
- Figur 3: einen erfindungsgemäßen Überzug auf einer Son- nenblende gemäß einer dritten Ausführungsform.
- Figur 4: einen erfindungsgemäßen Überzug auf einer Son- nenblende gemäß einer vierten Ausführungsform.
- Figur 5: einen erfindungsgemäßen Überzug auf einer Son- nenblende gemäß einer fünften Ausführungsform, und
- Figur 6: einen erfindungsgemäßen Überzug auf einer Son- nenblende gemäß einer sechsten Ausführungsform.

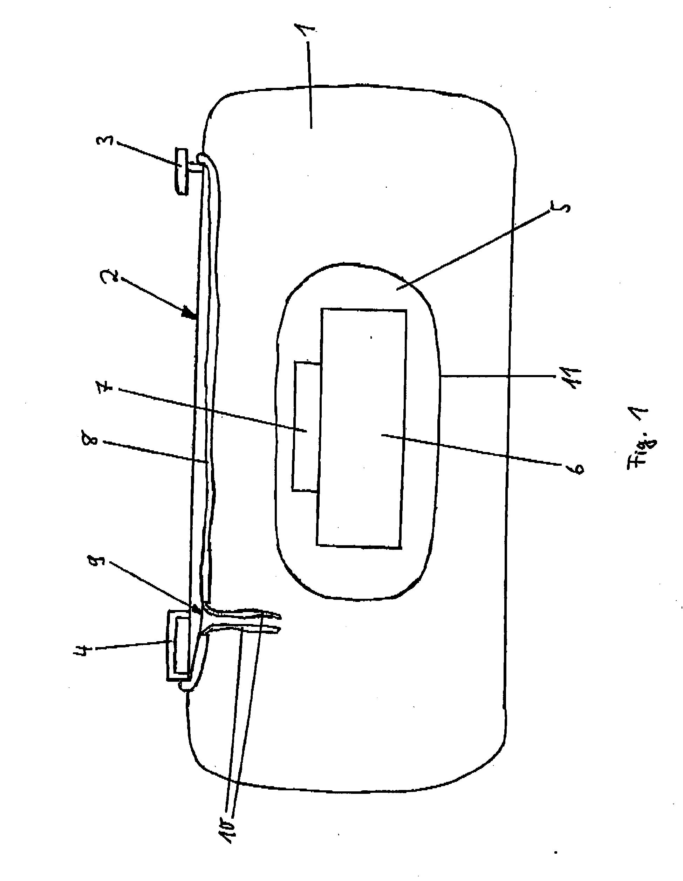

Die Figur 1 zeigt einen Überzug 1 auf einer längliche Sonnenblende 2 gemäß einer ersten Ausführungsform der vorliegenden Erfindung. Die Sonnenblende 2 weist an einer oberen Längsseite zwei Halterungen 3, 4 auf, mit denen sie üblicherweise an einem nicht gezeigten Holm einer Kraftfahrzeugkarosserie gehalten ist. Die Halterunger 3, 4 sind an gegenüberliegenden Enden der gehaltenen Längsseite der Sonnenblende 2 vorgesehen. Die erste Halterung 3 ist dabei mit einem dreh- und schwenkbares Gelenk ausgeführt und fest mit dem Holm verbunden, wohingegen die zweite Halterung 4 in der Form eines U ausgeführt ist, dessen Grundseite in eine nicht gezeigte Aufnahme am Dach einrastbar ist. Die Sonnenblende 2 ist an den beiden Halterungen 3, 4 schwenkbar, so dass eine in der Figur 1 gezeigte Innenseite 5 der Sonnenblende 2 entweder an dem Holm anliegt oder in den Innenraum des Fahrzeugs zeigt. In der Mitte der Innenseite 5 der Sonnenblende 2 ist ein Spiegel 6 vorgesehen, der üblicherweise als sogenannter "Schminkspiegel" von in der Fahrzeugkabine befindlichen Personen benutzt wird. Der Spiegel 6 ist länglich ausgebildet, wobei die Längsseiten des Spiegels 6 mit den Längsseiten der Sonnenblende 2 korrespondieren. An der oberen Längsseite des Spiegels 6 ist zusätzlich eine Beleuchtungseinrichtung 7 vorgesehen, welche die Nutzung des Spiegels 6 bei Dunkelheit erleichtert.

Der Überzug 1 ist als länglicher Beutel ausgebildet, der an einer Längsseite eine Beutelöffnung aufweist. Damit ist der Überzug 1 von der nicht gehaltenen Längsseite der Sonnenblende 2 auf diese aufschiebbar. Die Abmessungen des Überzugs 1 korrespondieren mit denen der Sonnenblende 2, wobei der Überzug 1 wenigstens geringfügig größer ist, damit er über die Sonnenblende 2 geschoben werden kann. Um die Öffnung herum ist ein Bund 8 vorgesehen, der eine Unterbrechung 9 aufweist. Durch den Bund 8 ist ein Zugband 10 geführt, dessen Enden an der Unterbrechung 9 aus dem Bund 8 herausragen. Über das Zugband 10 kann der Bund 8 zusammengerafft werden, so dass sich die Öffnung des Überzugs 1 verkleinert und der Überzug 1 auf der Sonnenblende 2 gehalten wird.

Der Überzug 1 besteht aus einem elastischen Material, so dass der Überzug 1 bei Nichtbenutzung eine Größe aufweist, die kleiner als die der Sonnenblende 2 ist. Beim Aufschieben auf die Sonnenblende 2 wird der Überzug 1 elastisch gedehnt, so dass seine Abmessungen größer werden als die der Sonnenblende 2. Im aufgeschobenen Zustand nimmt der Überzug 1 die Form der Sonnenblende 2 an.

Der Überzug 1 weist an der Seite, welche die Innenseite 5 der Sonnenblende 2 bedeckt, eine ovale Aussparung 11 auf, die in der Mitte dieser Seite 5 angeordnet ist. Die Aussparung 11 umfasst einen Bereich, der den Spiegel 6 und die Beleuchtungseinrichtung 7 einschließt.

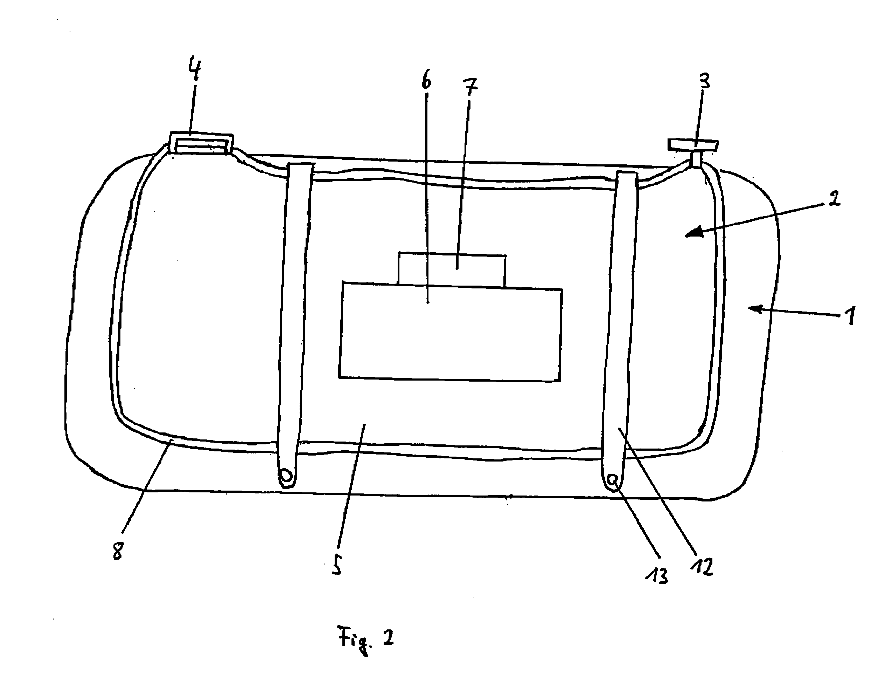

Gemäß einer zweiten Ausführungsform der vorliegenden Erfindung, die in der Figur 2 gezeigt ist, ist ein Überzug 1 vorgesehen, der die Sonnenblende 2 im wesentlichen von einer nicht gezeigten Außenseite bedeckt. Die Sonnenblende 2 ist hier identisch zu der Sonnenblende 2 der ersten Ausführungsform ausgeführt, weshalb auch die gleichen Bezugsziffern verwendet werden.

Der Überzug 1 ist hier so ausgeführt, dass er die Außenseite der Sonnenblende 2 und außerdem einen Randbereich der Innenseite 5 der Sonnenblende 2 überdeckt. Die Halterungen 3, 4 an der gehaltenen Seite der Sonnenblende 2 verhindern, **dass** auch der Randbereich an dieser Seite von dem Überzug 1 bedeckt wird, indem sie den Überzug 1 an dieser Stelle blockieren. Der Überzug 1 weist an seinem Rand einen Bund 8 auf, in dem ein elastisches Zugband nicht sichtbar geführt ist. Durch dieses elastische Zugband wird der Bund 8 zusammengezogen, so dass der Überzug 1 auf der Sonnenblende 2 gespannt wird und die Form der Sonnenblenden 2 annimmt.

An dem Überzug 1 befinden sich an dem gehaltenen Ende der Sonnenblende 2 zwei Querbänder 12, die über die gesamte Innenseite 5 der Sonnenblende 2 bis zu der gegenüberliegenden Längsseite des Überzugs 1 reichen. An der gehaltenen Seite sind die Querbänder 12 fest mit dem Überzug 1 verbunden, zum Beispiel durch Annähen. An dem anderen Ende weisen die Querbänder 12 einen Druckknopf 13 auf, dessen nicht gezeigtes Gegenstück an der nicht gehaltenen Längsseite der Sonnenblende 2 an dem Überzug 1 vorgesehen ist.

Zum Anbringen des Überzugs 1 an der Sonnenblende 2 wird zunächst der Überzug 1 über die Außenseite der Sonnenblende 2 gestülpt, so dass die Ränder mit dem Bund 8 auf der Innenseite 5 der Sonnenblende 2 anliegen. Das elastische Zugband an dem Bund 8 sorgt dabei für eine Vorspannung, so dase der Überzug 1 bereits an der Sonnenblende 2 hält. Daraufhin werden die Querbänder 12 zwischen dem Holm und der gehaltenen Längsseite der Sonnenblenden 2 eingefädelt und zu der gegenüberliegenden Seite der Sonnenblende 2 gezogen. Dort werden die Druckknöpfe 13 der Querbänder 12 eingerastet, so **dass** die feste Verbindung des Überzugs 1 mit der Sonnenblende 2 entsteht. Die zwei Querbänder 12 sind durch ihre Anordnung zu den seitlichen Rändern der Sonnenblende 2 hin einerseits ideal geeignet, um den Überzug 1 gleichmäßig auf der Sonnenblende 2 zu halten, und lassen gleichzeitig den mittleren Bereich der Innenseite 5 der Sonnenblende 2 frei, so dass der Spiegel 6 mit der Beleuchtungseinrichtung 7 nicht bedeckt und somit zugänglich ist.

Auch der Überzug 1 gemäß der zweiten Ausführungsform der Erfindung ist aus einem elastischen Material gefertigt, so dass sich der Überzug 1 leicht auf der Sonnenblende 2 anbringen lässt und deren Form annimmt. Damit können unterschiedlich geformte Sonnenblenden 2 mit dem erfindungsgemäßen Überzug 1 überzogen werden, ohne **dass** jeweils eine individuelle Gestaltung des Überzugs 1 erforderlich ist.

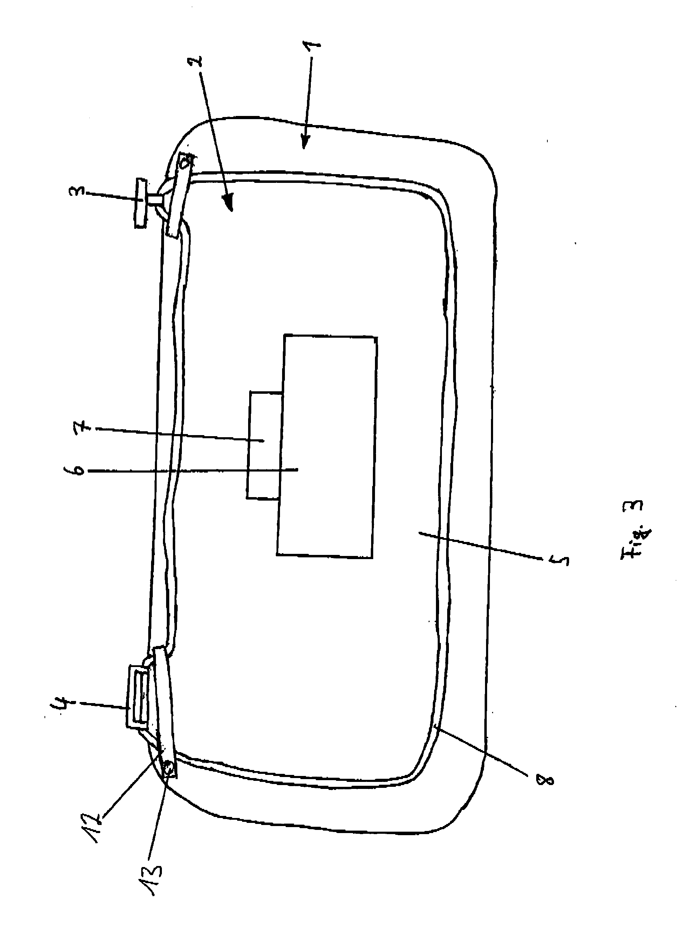

Figur 3 zeigt eine dritte Ausführungsform der vorliegenden Erfindung, bei der ein Überzug 1 eine Sonnenblende 2 im Wesentlichen von einer nicht gezeigten Außenseite bedeckt. Auch in diesem Ausführungsbeispiel werden für gleiche Teile die gleichen Bezugsziffern verwendet.

Der Überzug 1 ist so ausgeführt, dass er zusätzlich zu der Außenseite der Sonnenblende 2 auch einen Randbereich einer Innenseite 5 der Sonnenblende 2 überdeckt. Halterungen 3, 4 an einer gehaltenen Längsseite der Sonnenblende 2 verhindern, dass der Randbereich an dieser Seite von dem Überzug 1 bedeckt wird. Der Überzug 1 weist an seinem Rand einen Bund 8 auf, in dem ein elastisches Zugband nicht sichtbar geführt ist. Durch das elastische Zugband wird der Bund 8 zusammengezogen, so **dass** der Überzug 1 auf der Sonnenblende 2 gespannt wird und die Form derselben annimmt. An der gehaltenen Längsseite des Überzugs 1 befinden sich zwei Querbänder 12, die jeweils innenliegend von den Halterungen 3, 4 zum Beispiel durch Annähen festgehalten sind. An ihrem nicht gehaltenen Ende weisen die Querbänder 12 einen Druckknopf 13 auf, der jeweils ein nicht separat gezeigtes Gegenstück an einer Querseite des Überzugs 1 aufweist. Querbänder 12 und die entsprechenden Bereiche des Bundes 8 bilden jeweils eine Einfassung, die eine Halterung 3, 4 der Sonnenblende 2 umschließt und so den Überzug 1 auf der Sonnenblende 2 fixiert.

Zum Anbringen des Überzuges 1 an der Sonnenblende 2 wird zunächst der Überzug 1 über die Außenseite der Sonnenblende 2 gestülpt, so dass die Ränder mit dem Bund 8 auf der Innenseite 5 der Sonnenblende 2 anliegen. Das elastische Zugband an dem Bund 8 sorgt für eine Vorspannung, wodurch der Überzug 1 bereits an der Sonnenblende 2 hält.

Anschließend werden die Querbänder 12 um die jeweils benachbarte Halterung 3, 4 herumgeführt und mit den Druckknöpfen 13 an den Querseiten des Überzugs 1 eingerastet. Es entsteht eine feste Verbindung des Überzuges 1 mit der Sonnenblende 2, bei der die Sonnenblende 2 auch über den Rand der gehaltenen Längsseite zu der Innenseite 5 gezogen wird.

Der Überzug 1 gemäß der dritten Ausführungsform ist aus einem elastischen Material gefertigt, / so dass sich der Überzug 1 leicht auf der Sonnenblenden 2 anbringen lässt und deren Form annimmt. Der Überzug 1 schmiegt sich somit vollständig an die Sonnenblende 2 an. Somit tragen mit dem Zugband, der Elastizität des Überzugs 1 und den Querbändern 12 drei Komponenten zum sicheren Sitz des Überzugs 1 auf der Sonnenblende 2 bei.

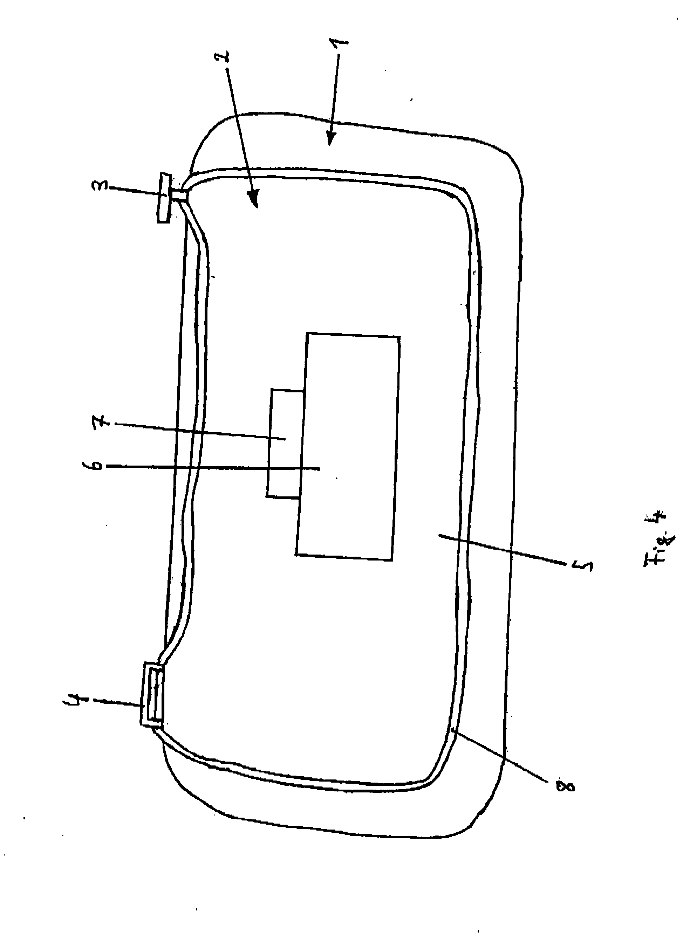

Figur 4 zeigt einen Überzug 1 gemäß einer vierten Ausführungsform der vorliegenden Erfindung. Der Überzug 1 ist im wesentlichen identisch zu dem der dritten Ausführungsform, außer dass der Überzug 1 ausschließlich durch ein nicht gezeigtes Zugband im Bund 8 gehalten wird. Das Zugband ist hier ein elastisches Band, so dass der Überzug 1 lediglich über die Sonnenblende 2 gezogen werden muss und ohne zusätzliche Montageschritte auf dieser gehalten wird. Zusätzlich bewirkt das elastische Material des Überzugs 1, das dieser die Form der Sonnenblende 2 annimmt.

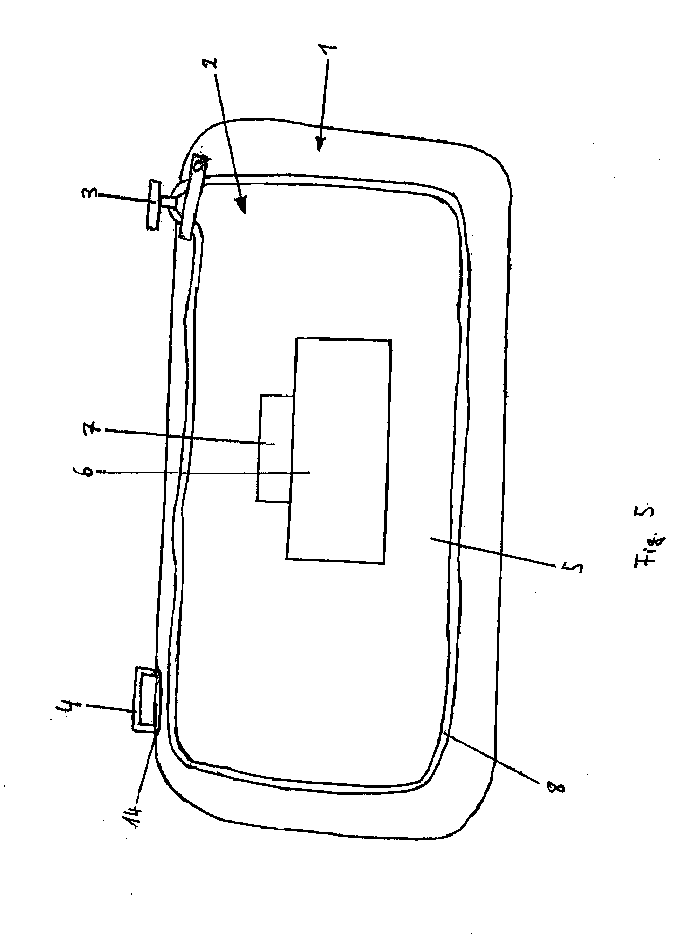

Figur 5 zeigt einen Überzug 1 gemäß einer fünften Ausführungsform der vorliegenden Erfindung. Der Überzug 1 ist im wesentlichen identisch zu dem der dritten Ausführungsform, außer dass der Überzug 1 einen länglichen Ausschnitt 14 aufweist, der mit der Position der zweiten Halterung 4 korrespondiert. Dadurch kann der Überzug 1 über die zweite Halterung 4 gezogen werden und der Bund 8 wird durch diese nicht blockiert. Dadurch kann der Rand des Überzugs 1 gleichmäßig über die Innenseite 5 der Sonnenblende 2 verlaufen. Nach dem Einrasten der zweiten Halterung 4 ist der Überzug 1 an dieser Stelle unverrutschbar gehalten.

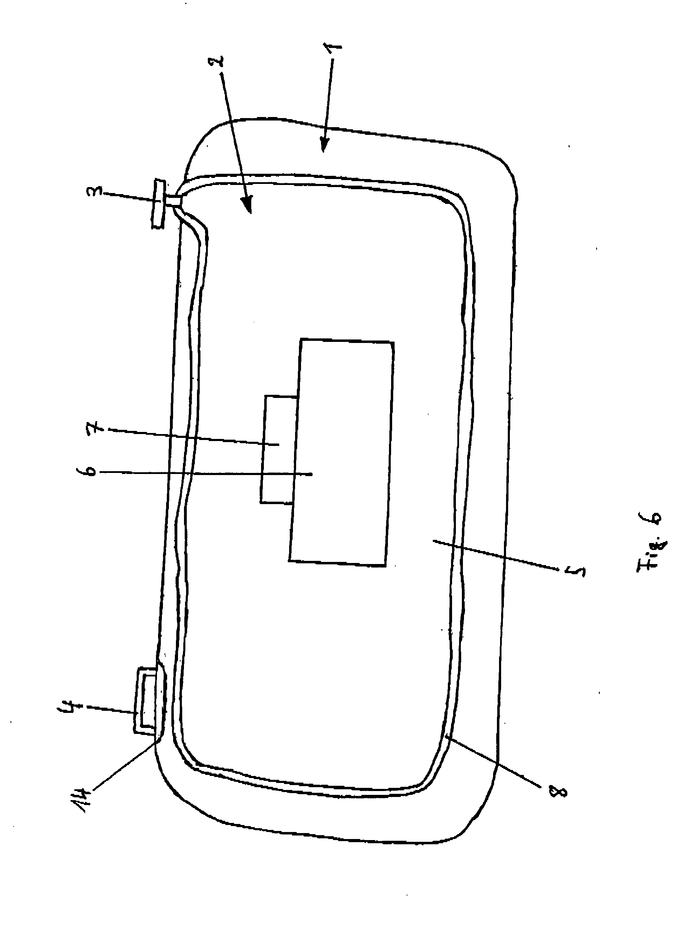

Figur 6 zeigt einen Überzug 1 gemäß einer sechsten Ausführungsform der vorliegenden Erfindung. Der Überzug 1 ist im wesentlichen identisch zu dem der vierten Ausführungsform, außer dass der Überzug 1 einen längliche Ausschnitt 14 aufweist, der mit der Position der zweiten Halterung 4 korrespondiert. Wie in der fünften Ausführungsform beschrieben kann der Überzug 1 auch hier über die zweite Halterung 4 gezogen werden, ohne dass der Bund 8 durch diese blockiert wird. Auch ist der Überzug 1 nach dem Einrasten der zweiten Halterung 4 an dieser Stelle unverrutschbar gehalten ist.

## Patentansprüche

1. Überzug für eine längliche Sonnenblende (2), insbesondere eines Kraftfahrzeugs, die an einer ihrer Längsseiten gehalten ist, **dadurch gekennzeichnet, dass** der Überzug (1) die der Sonne zugewandte Außenseite und die nicht gehaltenen Seitenränder der Sonnenblende (2) bedeckt und der Überzug (1) an seinem Randbereich einen Bund (8) mit einem darin eingelassenen Zugband aufweist.

2. Überzug nach Anspruch 1, **dadurch gekennzeichnet, dass** das Enden des Zugbands aus dem Bund herausreichen und der Bund (8) mit dem Zugband zusammenraffbar ist und/oder das Zugband ein elastisches Band, insbesondere ein Gummiband ist.

3. Überzug nach einem der vorhergehenden Ansprüche, **dadurch gekennzeichnet, dass** der Überzug (1) wenigstens ein Querband (12) aufweist, das an einer Seite, insbesondere der gehaltenen Längsseite des Überzugs (1) vorgesehen und über die Innenseite (5) der Sonnenblende (2) mit einer anderen Seite, insbesondere der anderen Längsseite des Überzugs (1) verbindbar ist, um den Überzug (1) an der Sonnenblende (2) zu fixieren.

4. Überzug nach Anspruch 3, **dadurch gekennzeichnet, dass** Befestigungsmittel, insbesondere ein Knopf und Knopfloch, ein Druckknopf (13), ein Klettverschluss, eine Verbindungsschnur oder ein Haken und Öse vorgesehen sind, mit denen das wenigstens eine Querband (12) mit der anderen Seite des Überzugs (1) verbindbar ist.

5. Überzug nach einem der Ansprüche 3 oder 4, **dadurch gekennzeichnet, dass** das wenigstens eine Querband (12) ein elastisches Band, insbesondere ein Gummiband ist.

6. Überzug nach einem der Ansprüche 3 bis 5, **dadurch gekennzeichnet, dass** eine Mehrzahl von Querbändern (12) an dem Überzug (1) vorgesehen sind, welche so beabstandet voneinander über die Innenseite (5) der Sonnenblende (2) geführt ist, dass ein Teil der Innenseite (5), insbesondere ein daran vorgesehener Spiegel (6), sichtbar und zugänglich ist.

7. Überzug nach einem der Ansprüche 3 bis 6, **dadurch gekennzeichnet, dass** ein Querband (12) mit einem Teilbereich des Bunds (8) eine Einfassung bildet, die eine Halterung (3, 4) der Sonnenblende (2) umschließt.

8. Überzug nach einem der vorhergehenden Ansprüche, **dadurch gekennzeichnet, dass** der Überzug (1) zumindest teilweise aus einem elastischen Material gefertigt ist und im aufgeschobenen Zustand die Form der Sonnenblende (2) annimmt.

9. Überzug nach einem der vorhergehenden Ansprüche, **dadurch gekennzeichnet, dass** der Überzug (1) zumindest einen Ausschnitt (14) aufweist, der im aufgeschobenen zustand mit der Position einer Halterung (3, 4) korrespondiert.

10. Überzug für eine längliche Sonnenblende (2), insbesondere eines Kraftfahrzeugs, die an einer ihrer Längsseiten gehalten ist, wobei der Überzug (1) beutelartig ausgebildet ist, **dadurch gekennzeichnet, dass** eine Beutelöffnung an einer Längsseite des Überzugs (1) vorgesehen ist, so dass dieser von einem der gehaltenen Längsseite der Sonnenblende (2) gegenüberliegenden Seite auf die Sonnenblenden (2) aufschiebbar ist, und Befestigungsmittel im Bereich der Beutelöffnung vorgesehen sind, mit denen der Überzug (1) an der Sonnenblende (2) fixierbar ist.

11. Überzug nach Anspruch 10, **dadurch gekennzeichnet, dass** die Befestigungsmittel einen die Beutelöffnung umgebenden Bund (8) und ein darin eingelassenes Zugband (10) aufweisen.

12. Überzug nach Anspruch 11, **dadurch gekennzeichnet, dass** der Bund (8) eine Öffnung (9) aufweist und Enden des Zugbands (10) aus dem Bund (8) herausreichen und der Bund (8) mit dem Zugband (10) zusammenraffbar ist und/oder das Zugband (10) ein elastisches Band, insbesondere ein Gummiband ist.

13. Überzug nach Anspruch 10, **dadurch gekennzeichnet, dass** die Befestigungsmittel wenigstens einen Knopf und Knopfloch, einen Druckknopf, einen Klettverschluss, ein Paar Verbindungsschnüre oder einen Haken und Öse umfassen.

14. Überzug nach einem der Ansprüche 10 bis 13, **dadurch gekennzeichnet, dass** der Überzug (1) zumindest teilweise aus einem elastischen Material gefertigt ist und im aufgeschobenen Zustand die Form der Sonnenblende (2) annimmt.

15. Überzug nach einem der Ansprüche 10 bis 14, **dadurch gekennzeichnet, dass** der Überzug (1) teilweise aus einem transparenten Material besteht oder eine Aussparung (11) aufweist, so dass ein Teil der Sonnenblende (2), insbesondere ein daran vorgesehener Spiegel (6), sichthar ist.
